# EUROPEAN PATENT SPECIFICATION

(11) **EP 4 688 981 B1**
(45) Date of publication and mention of the grant of the patent: **21.10.2026**
(21) Application number: 24718390.8
(22) Date of filing: 05.04.2024
(51) Int. Cl.: C09D 175/04, C08G 18/62, C08G 18/79, C08G 18/22

(54) **CLEARCOAT COATING MATERIALS FOR PLASTIC PARTS**
KLARLACKBESCHICHTUNGSMATERIALIEN FÜR KUNSTSTOFFTEILE
MATÉRIAUX DE REVÊTEMENT TRANSPARENT POUR PIÈCES EN MATIÈRE PLASTIQUE

(30) Priority: 06.04.2023 EP 23167126
(43) Date of publication of application: 11.02.2026
(73) Proprietor: Surventis GmbH, 48165 Münster (DE)
(72) Inventor: BECKHAUS, Christian, 48165 Münster (DE); HUNDER, Bianca, 48165 Münster (DE); MITTAG, Friederike, 48165 Münster (DE); KOESTER, Martin, 48165 Münster (DE)
(74) Representative: Surventis Global IP Association
(86) International application number: PCT/EP2024/059380
(87) International publication number: WO 2024/209083

(56) References cited:
- US-A1- 2014 147 596
- US-A1- 2021 291 224
- US-B1- 6 472 493

## Description

The present invention relates to a solvent-based two-pack clearcoat coating material comprising one or more poly(meth)acrylate polyols and isocyanate containing curing agents and being particularly suitable for coating polymeric substrates. The invention further relates to a method of coating an uncoated or precoated substrate with such coating material and the thus coated substrate. Furthermore, the invention relates to the use of the coating materials for coating uncoated or precoated substrates, particularly in vehicle coating, such as automotive coating.

### BACKGROUND

Particularly in automotive industry, but not limited thereto, the coating of plastic parts plays a big role. There are high requirements on mechanical properties such as hardness and scratch resistance of such coatings, particularly the outermost coating layer, which typically is a clearcoat layer. On the other hand, the optical appearance plays a big role in this part of coatings industry, aiming to provide not only high mechanical quality of such coatings, but also providing a perfect look of the coatings to the customers.

Thus, applying clearcoats to plastic parts, particularly vehicle plastic parts is still a challenge, when a high film hardness, especially shortly after curing is to be reached and likewise a good optical appearance is to be achieved.

An insufficient film hardness shortly after curing is typically accompanied with several drawbacks in subsequent procedures such as sanding and polishing such parts is hardly possible or even packing and delivering such parts, since it is to be avoided that sanding and polishing destroys the yet not fully cured coating, and that packing material still sticks to thus coated surfaces. In case film hardness is only developed after long curing times, sanding, polishing, and packing need to wait and can be carried out only after a sufficient hardness is reached, thus delaying processes, and wasting time and resources.

Moreover, low film hardness leads to a low performance in chemical resistance to certain chemicals.

Furthermore, it is an aim of the present invention to provide clearcoat materials which can be cured at low temperature reaching equivalent or even better performance compared to standard clearcoat, and still achieving a good appearance such as good leveling characteristics.

US 2021/291224 A1 provides a storage stable one component aqueous basecoat composition containing a melamine formaldehyde crosslinker and a resin having groups reactive to the melamine formaldehyde crosslinker under acid catalysis. The basecoat composition is curable at a temperature of 110 °C or less when cured wet-on-wet with a solvent borne clear coat composition containing a polyisocyanate crosslinker.

### SUMMARY

The above aims were achieved by providing a solvent-based two-pack clearcoat coating material, comprising:
a master batch component comprising
   i.a. one or more poly(meth)acrylate polyols A, the poly(meth)acrylate polyols A having a hydroxyl value in the range from 160 to 240 mg KOH/g, and a weight-average molecular weight in the range from 1000 to 7000 g/mol; and
   ii.a. one or more catalysts C for crosslinking hydroxyl groups with free isocyanate groups; and
a hardener component comprising
   i.b. one or more curing agents B selected from the group consisting of diisocyanates and polyisocyanates;
   and
one or more aprotic organic solvents, which can be contained in the master batch component, the hardener component, or in the master batch component and in the hardener component, and
   0 to 10 wt.-% of protic solvents in the master batch component, based on the combined amount of the aprotic organic solvents and protic solvents contained in coating material.

Hereinafter, the above solvent-based two-pack clearcoat material and the preferred embodiments thereof as described hereinafter, are denoted as the "clearcoat coating material of the invention" or just the "coating material of the invention."

Further subject-matter of the invention is method of coating a substrate comprising the steps of
i. providing an uncoated or a pre-coated substrate;
ii. applying at least one clearcoat coating material of the invention on the uncoated or pre-coated substrate provided in step i. to obtain a clearcoat layer; and
iii. curing the clearcoat layer.

Hereinafter, the above method of coating a substrate and the preferred embodiments thereof as described hereinafter, are denoted as the "method of coating of the invention" or just the "method of the invention."

Yet another subject-matter of the present invention is a coated substrate, the substrate being uncoated or pre-coated and comprising a cured clearcoat layer as a topcoat layer, the cured clearcoat layer having been formed from the clearcoat coating material of the present invention, and the substrate being a metallic substrate, a glass substrate, a ceramic substrate, or a polymeric substrate.

A further object of the invention is the use of the clearcoat coating material of the present invention for coating of uncoated or precoated polymeric substrates, preferably vehicle bodies such as automotive bodies, or parts thereof, even more preferred polymeric parts of automotive bodies, such as bumpers or mirror caps.

### DETAILED DESCRIPTION

### Clearcoat Coating Material

The clearcoat coating material of the present invention is to be subsumed under the term "two-pack coating composition" or "two-pack coating material" - as defined in the textbook "Römpp Lexikon Lacke und Druckfarben", Thieme, 1998. It is a composition where curing is affected by mixing two components a master batch component ("Stammlack" or "A-Pack,") and a hardener component ("Härter" or "B-Pack") in a specified mixing ratio. The components themselves are not coating compositions, since they are not apt to film formation or do not form durable films.

The clearcoat coating material of the present invention is preferably apt to be cured at low temperature, i.e., a temperature in the range from 40 °C to 90 °C, preferably a temperature in the range from 50 to 85 °C, more preferred at a temperature from 60 to 75 °C.

Furthermore, the clearcoat coating material of the present invention contains one or more aprotic organic solvents, i.e., solvents not being proton donators and thus being chemically inert towards a reaction with NCO groups.

### Master Batch Component

The term "(meth)acryl" as used herein such as in "(meth)acrylic," "(meth)acrylate" etc., encompasses both, term "arcyl" and the term methacryl;" thus (meth)acrylic denotes for acrylic and methacrylic; and (meth)acrylate denotes for acrylate and methacrylate. As generally used in this field, the term "(meth)acrylate" as used, e.g., in alkyl (meth)acrylate denotes for the (meth)acrylic acid ester; thus, an alkyl (meth)acrylate is the alkyl ester of (meth)acrylic acid.

Furthermore, the term poly(meth)acrylate is used for polymers obtained from the polymerization of monomers having (meth)acrylic groups, such as alkyl or cycloalkyl (meth)acrylates and (meth)acrylic acid, while the use of further polymerizable monomers to produce the poly(meth)acrylates, such as vinylaromatic hydrocarbons is not excluded.

Preferably the poly(meth)acrylate polyols A as used in the coating materials of the present invention are obtained by polymerizing monomers which possess only one ethylenically unsaturated group such as a (meth)acrylic group, vinyl group or allyl group.

### Poly(meth)acrylate Polyol A

The poly(meth)acrylate polyols A as used in the clearcoat coating material of the present invention are preferably copolymers formed from hydroxyl-functional (meth)acrylates and non-hydroxy-functional monomers. The non-hydroxy-functional monomers preferably being selected from non-hydroxy-functional (meth)acrylates and vinylaromatic monomers.

Besides the mandatory hydroxyl value and weight-average molecular weight, the poly(meth)acrylate polyols A, as used in the clearcoat coating material of the invention, preferably possess a theoretical glass transition temperature (T_{g}) in the range from 50 °C to 100 °C, more preferably from 55 °C to 95 °C and most preferred from 60 to 90 °C, using the Flory Fox equation as described in detail in the experimental part of the description.

**If** the theoretical glass transition temperature of the poly(meth)acrylate polyol A exceeds 100 °C, the clear coat coating material of the invention may tend to form too brittle films, and if the theoretical glass transition temperature of the poly(meth)acrylate polyol A is below 50 °C, the clear coat coating material of the invention may tend to form too soft films with a low chemical resistance.

Since the T_{g} is calculated from the types and amounts of monomers in the poly(meth)acrylate polyols A, the selection of monomers determines the T_{g}. The influence of some types of monomers on the T_{g} is also disclosed herein below.

The hydroxy-functional (meth)acrylates, preferably the hydroxyalkyl (meth)acrylates, are selected from C₂-C₈-hydroxyalkyl (meth)acrylates, more preferred from C₂-C₆-hydroxyalkyl (meth)acrylates, and most preferred from C₂-C₄-hydroxyalkyl (meth)acrylates.

Specific hydroxyl-functional (meth)acrylates used are preferably hydroxyalkyl (meth)acrylates, such as in particular 2-hydroxyethyl (meth)acrylate, 2-hydroxypropyl (meth)acrylate, 3-hydroxypropyl (meth)acrylate, 3-hydroxybutyl (meth)acrylate, and 4-hydroxybutyl (meth)acrylate.

The non-hydroxy-functional (meth)acrylates, preferably alkyl (meth)acrylates, are selected from C₁-C₈-alkyl (meth)acrylates, more preferably C₂-C₈-alkyl (meth)acrylates, and even more preferred C₃-C₆-alkyl (meth)acrylates; and the cycloalkyl (meth)acrylates are preferably selected from C₃-C₁₀-cycloalkyl (meth)acrylates, more preferred C₄-C₈-cycloalkyl (meth)acrylates, and most preferred from C₄-C₆-cycloalkyl (meth)acrylates.

Specific examples of linear or branched alkyl (meth)acrylates, are, e.g., methyl (meth)acrylate, ethyl (meth)acrylate, propyl (meth)acrylate, isopropyl (meth)acrylate, butyl (meth)acrylate, isobutyl (meth)acrylate, tert-butyl (meth)acrylate, amyl (meth)acrylate, hexyl (meth)acrylate, ethylhexyl (meth)acrylate, 3,3,5-trimethylhexyl (meth)acrylate, stearyl (meth)acrylate, and lauryl (meth)acrylate; and examples of cycloalkyl (meth)acrylates, are, e.g., cyclopentyl (meth)acrylate, isobornyl (meth)acrylate, and cyclohexyl (meth)acrylate.

Amongst the alkyl (meth)acrylates and cycloalkyl (meth)acrylates, generally the use of cycloalkyl (meth)acrylates in the production of the poly(meth)acrylate polyols leads to an increase of the theoretical glass transition temperature; and amongst the alkyl (meth)acrylates used in the production of the poly(meth)acrylate polyols of the present invention, typically the theoretical glass transition temperature increases with the number of carbon atoms in the alkyl of the alkyl (meth)acrylates.

Further monomers which can be used for polymerizing the poly(meth)acrylate polyols are, e.g., vinylaromatic hydrocarbons, such as vinyltoluene, alpha-methylstyrene or particularly preferred styrene; amides or nitriles of acrylic or methacrylic acid; vinyl esters or vinyl ethers; and (meth)acrylic acid. An increase in the amount of vinylaromatic hydrocarbons typically leads to an increase in the glass transition temperature of the poly(meth)acrylic polyol.

Preferably the poly(meth)acrylate polyols A comprise in polymerized form the following monomers
a) one or more (meth)acrylic acid esters selected from alkyl (meth)acrylates and cycloalkyl (meth)acrylates;
b) one or more hydroxyalkyl (meth)acrylates;
c) one or more vinyl aromatic monomers; and
d) optionally (meth)acrylic acid, acrylic acid being more preferred.

More preferred the poly(meth)acrylate polyol comprises in polymerized form the following amounts of monomers
a) 20 to 40 wt.-%, preferably 25 to 35 wt.-% of the one or more (meth)acrylic acid esters selected from alkyl (meth)acrylates and cycloalkyl (meth)acrylates;
b) 40 to 60 wt.-%, preferably 45 to 55 wt.-% of one or more hydroxyalkyl (meth)acrylates;
c) 10 to 30 wt.-%, preferably 15 to 25 wt.-% of one or more vinyl aromatic monomers; and
d) 0 to 5 wt.-%, preferably 0.5 to 4 wt.-% of (meth)acrylic acid;
the weight percentages being based on the total amount of all monomers being present in polymerized form in the poly(meth)acrylate polyol.

The amount of hydroxyl-functional (meth)acrylates is preferably in the above ranges and chosen to allow the hydroxyl value of the poly(meth)acrylate polyol A as used in the clearcoat coating material of the invention to be in a range from 160 to 240 mg KOH/g, more preferred in the range from 170 to 230 mg KOH/g and most preferred in a range from 180 to 220 mg KOH/g. The hydroxyl value of the poly(meth)acrylate polyol is determined as described in detail in the experimental part of the description.

**If** the hydroxyl value of the poly(meth)acrylate polyol A exceeds 240 mg KOH/g, the clear coat coating material of the invention tends to form films with insufficient crosslinking and weak resistances, and if the hydroxyl value of the poly(meth)acrylate polyol A is below 160 mg KOH/g, the clear coat coating material of the invention tends to form films with too low crosslinking.

The poly(meth)acrylate polyols as used in the clearcoat coating material of the invention have weight-average molecular weights M_{w} in the range from 1,000 to 7,000 g/mol and preferably from 1,500 to 6,500 g/mol, more preferred in the range from 2,000 to 6,000 g/mol, even more preferred in the range from 2,500 to 5,500 g/mol, and most preferred in the range of 3,000 to 5,000 g/mol, in each case measured by means of gel permeation chromatography (GPC) as described in detail in the experimental part of the description.

**If** the weight-average molecular weights M_{w} of the poly(meth)acrylate polyol A exceeds 7,000 g/mol, the clear coat coating material of the invention tends to not level properly and may have too low solids content, and if the weight-average molecular weights M_{w} of the poly(meth)acrylate polyol A is below 1,000 g/mol, the clear coat coating material of the invention tends to not crosslink densely enough.

### Catalysts C

The solvent-borne two-pack clearcoat coating material of the present invention contains one or more catalysts for crosslinking the hydroxyl groups of the poly(meth)acrylate polyol and the free isocyanate groups of the diisocyanates and/or polyisocyanates of the curing agents. The catalysts should provide for an efficient crosslinking, which however should not be too fast, i.e., the efficiency particularly at very low temperatures should not be too high, to avoid a bad appearance, particularly a bad levelling characteristic of the coating layer.

Particularly suitable catalysts are selected from the group of tertiary amines and inorganic or organic metal containing catalysts.

Examples of tertiary amine catalysts are, e.g., 1,4-diazabicyclo[2.2.2]octane (DABCO), triethylamine and diisopropylethylamine. Examples for inorganic metal containing catalysts are, e.g., zinc oxide, bismuth oxide and tin oxide.

However, more preferred are the catalysts belonging to the group of organic metal catalysts such as dioctyltin dilaurate (DOTL), dibutyltin dilaurate (DBTL), and even more preferred zinc and bismuth salts of linear or branched, preferably branched monocarboxylic acids containing 4 to 14, more preferred 6 to 12 and most preferred 8 to 10 carbon atoms in the monocarboxylic acid. Amongst the afore-mentioned, the zinc salts are most preferred. Examples of such zinc and bismuth salts are zinc neodecanoate, zinc 2-ethylhexanoate, bismuth neodecanoate and bismuth 2-ethylhexanoate.

### Hardener Component

### Curing Agent B

The curing agents used in the hardener component of the two-pack clearcoat coating material of the present invention are selected from diisocyanates and/or polyisocyanates and mixtures thereof.

Per definition the diisocyanate must contain two isocyanato-groups per species, i.e., the species needs to contain two free, i.e., unblocked NCO groups. The polyisocyanates must contain more than two free isocyanate-groups on average.

Suitable diisocyanates are for example substituted or unsubstituted aromatic, aliphatic, cycloaliphatic and/or heterocyclic diisocyanates.

Examples of preferred aromatic diisocyanates are as follows: 2,4-toluene diisocyanate, 2,6-toluene diisocyanate, diphenylmethane 4,4'-diisocyanate, diphenylmethane 2,4'-diisocyanate, p-phenylene diisocyanate, biphenyl diisocyanates, 3,3'-dimethyl-4,4'-diphenylene diisocyanate, and mixtures thereof.

Examples of the even more preferred aliphatic and cycloaliphatic diisocyanates are tetramethylene 1,4-diisocyanate, hexamethylene 1,6-diisocyanate, 2,2,4-trimethylhexane 1,6-diisocyanate, isophorone diisocyanate, ethylene diisocyanate, 1,12-dodecane diisocyanate, cyclobutane 1,3-diisocyanate, cyclohexane 1,3-diisocyanate, cyclohexane 1,4-diisocyanate, methylcyclohexyl diisocyanates, hexahydrotoluene 2,4-diisocyanate, hexahydrotoluene 2,6-diisocyanate, hexahydrophenylene 1,3-diisocyanate, hexahydrophenylene 1,4-diisocyanate, perhydrodiphenylmethane 2,4'-diisocyanate, 4,4'-methylenedicyclohexyl diisocyanate (e.g., Desmodur ^{®} W from Bayer AG), tetramethylxylyl diisocyanates (e.g., TMXDI ^{®} from American Cyanamid), and mixtures of the aforementioned diisocyanates.

Amongst the afore-mentioned diisocyanates the aliphatic and/or cycloaliphatic diisocyanates are most preferred. Preferred examples are, e.g., hexamethylene 1,6-diisocyanate, isophorone diisocyanate, and 4,4'-methylenedicyclohexyl diisocyanate. Additionally, preferred diisocyanates are the biuret dimers and uretdion dimers of the afore-mentioned diisocyanates.

Particularly suitable polyisocyanates are trimers of diisocyanates, particularly the trimers of the afore-mentioned diisocyanates. Most preferred trimers of diisocyanates are isocyanurate trimers and iminooxadiazindion trimers, amongst which isocyanurate trimers are even more preferred. Most preference is given to isocyanurate trimers of aliphatic and/or cycloaliphatic diisocyanates, such as isocyanurate trimers of hexamethylene 1,6-diisocyanate, isophorone diisocyanate and/or 4,4'-methylenedicyclohexyl diisocyanate.

The diisocyanates and/or polyisocyanates used in the present invention may be employed dissolved in one or more aprotic organic solvents. Preferred aprotic organic solvents are those mentioned under the respective headline hereinbelow. Particularly preferred are hydrocarbons, such as Solvent naphtha and esters, such as butyl acetate. However, it is to be avoided to introduce any water and/or protic solvents in the hardener component, since pre-mature reaction between the free NCO groups and such solvents is to be avoided.

### Solvents S

### Aprotic Organic Solvents Sₐ

Examples of aprotic solvents which used in the present invention are, e.g., aliphatic and/or aromatic hydrocarbons such as toluene, xylene, Solvent naphtha, Solvesso 100 or Hydrosol ^{®} (obtainable from ARAL), parachlorobenzotrifluoride; ketones, such as acetone, methyl ethyl ketone, methyl propyl ketone or methyl amyl ketone; esters, such as ethyl acetate, butyl acetate, pentyl acetate, methoxypropyl actetate, or ethylethoxypropionate; ethers; or mixtures of the afore-mentioned solvents.

Amongst the aprotic organic solvents it is preferred to use at least some polar aprotic solvents to obtain a high conductivity. Such polar aprotic solvents are, e.g., ketones, such as acetone, methyl ethyl ketone, methyl propyl ketone or methyl amyl ketone; esters, such as ethyl acetate, butyl acetate, pentyl acetate, methoxypropyl actetate, or ethylethoxypropionate; ethers; or mixtures of the afore-mentioned polar aprotic solvents.

Consequently, it is preferred that the one or more aprotic organic solvents used in the coating material of the invention are selected from polar aprotic solvents, mixtures of polar aprotic solvents, or mixtures of polar aprotic solvents with one or more non-polar aprotic solvents, such as aliphatic and/or aromatic hydrocarbons.

The aprotic organic solvents can be employed in the master batch component, the hardener component or both.

### Protic Organic Solvents Sₚ

For the clearcoat coating materials of the present invention it is preferred that no protic organic solvents, i.e., 0 wt.-% are contained in the clearcoat coating material of the present invention. **If** such protic organic solvents are contained, such as alcohols, glycols, glycol ethers and glycolic acid esters, they are preferably contained in amounts of 0 to 10 wt.-%, more preferred 0 to 5 wt.-% and most preferred 0 to 3 wt.-%, based on the combined amount of aprotic organic solvents and protic organic solvents.

The protic organic solvents, if present, are employed in the master batch component to avoid premature reaction with the curing agent.

### Water

Water, as an inorganic protic solvent, should not be contained in the two pack coating materials of the present invention, since it may react with isocyanate and may even lead to the formation of carbon dioxide in such reaction, deteriorating the surface properties of the clearcoat layers. Thus, water should not intentionally be added to the clearcoat coating materials of the present invention. However, the organic solvents or solvent mixtures preferably may contain traces of water, the content of which should preferably not exceed 0.5 wt.-%, more preferably it should not exceed 0.2 wt.-%, based on the organic solvent or organic solvent mixture; and most preferred the organic solvents or mixtures thereof are water-free.

### Further Ingredients F

Further ingredients F may be either contained in the master batch component, the hardener component, or both. However, since the hardener component comprises isocyanate-containing curing agents, which are reactive toward many compounds, further ingredients F are preferably employed in the master batch component.

### Metal Oxides and Semi-Metal Oxides, not being Organically Modified (Fₒ)

Preferably the master batch component further comprises at least one metal oxide and/or semi-metal oxide, not being organically modified. "Not being organically modified" means that typical modifications with, e.g., organosilanes, which lead to hydrophobic surface modifications of the metal oxides and/or hydrophobic semi-metal oxides, are not carried out.

Examples for such metal oxides are, e.g., aluminas and zirconias; and examples of the preferred semi-metal oxides are silicas, particularly preferred precipitated or fumed silicas, preferably fumed silicas, and most preferred fumes silicas having a BET-surface in the range from 250 to 500 m²/g, preferably 300 to 450 m²/g and most preferred 350 to 450 m²/g.

Since such metal oxides and semi-metal oxides typically carry hydroxy groups at their surface, they are often chemically modified, particularly hydrophobic modified. However, it was found by the present inventors that such hydrophobically modified metal oxides and/or semi-metal oxides are not suitable in the present invention to enhance the chemical resistance. Only those, which are not organically modified increased the chemical resistance of the clearcoat layers formed from the clearcoat coating materials of the present invention.

The metal oxides and/or semi-metal oxides, which are not organically modified, are preferably employed in the two-pack clearcoat coating material of the present invention in form of pastes comprising, e.g., polymeric binder and one or more aprotic organic solvents Sₐ, as described above. The polymeric binder can be one or more of the poly(meth)acrylate polyol A as defined above or one or more of the further polymeric binders Fₐ as described in the following.

The one or more metal oxides and/or semi-metal oxides are preferably contained in the masterbatch component.

### Further Polymeric Binders (F_{b})

The solvent-based two-pack clearcoat coating material of the present invention may contain further polymeric binders other than the poly(meth)acrylate polyols A. The term binder is used in accordance with EN ISO 4618:10-2006 as being the non-volatile part (solids content) of the coating material not including pigments and fillers.

If contained, such further polymeric binders are preferably poly(meth)acrylate polyols, which however have a hydroxyl value and/or weight-average molecular weight outside the ranges for the mandatory poly(meth)acrylate polyols A.

Further polymeric binders may, however, also be selected from the group of polyesters, polyethers, or polyurethanes. However, if contained, they are most preferably selected from the group of poly(meth)acrylates, particularly poly(meth)acrylate polyols.

Such further polymeric binders may be part of pastes containing the above-described metal oxides and/or semi-metal oxides, which are not organically modified, or they may, e.g., be part of the sag control agents as described in the following.

Preferably, the further polymeric binders are present in the masterbatch component.

### Sag Control Agents (F_{SCA})

The sag control agent (SCA), which is preferably used in the solvent-based two-pack clearcoat coating material of the present invention, preferably contains urea crystals, which maybe further associated with a resin and one or more aprotic organic solvents.

Typically, the urea crystals suitable for use herein are a reaction product of one or more amines and one or more diisocyanates and/or polyisocyanates.

The amines can be selected from primary amines, secondary amines, diamines, ketamines, aldimines or combinations thereof. The amines are preferably amine monomers. Most preferably, the amines are a primary amines, even more preferred primary monoamines.

Examples of primary amines include benzyl amine, ethyl amine, I-propylamine, n-propylamine, 1-butylamine, 2-butylamine, t-butylamine, n-pentylamine, 2-methyl-1-butylamine, 1-hexylamine, 2-hexylamine, 3-hexylamine, octylamine, decylamine, laurylamine, stearylamine, cyclohexylamine, and aniline. Other suitable primary amines include alkyl ether amines, such as, for example, 2-aminoethanol alkyl ether, 3-aminopropanol alkyl ether, and 2-aminopropanol alkyl ether.

Examples of secondary amines can include, for example, the N-alkyl derivatives of any of the primary amines listed above wherein alkyl means an alkyl radical having in the range of from 1 to 10 carbon atoms.

Examples of diamines can include, aliphatic and cycloaliphatic diamines such as, for example, ethylene diamine, 1,2-propylenediamine, 1,3-diaminopropane, 1,4-butanediamine, neopentanediamine, 4,4-diaminodicyclohexylmethane, isophoronediamine, hexamethylenediamine, 1,12-dodecanediamine, piperazine, polyether diamines, polytrimethylene ether diamine or a combination thereof.

Combinations of any of the above listed amines are also suitable.

Preferably, the amine is selected from the group consisting of benzyl amine, ethylamine, n-propylamine, 2-propylamine, n-butylamine, 2-butylamine, t-butylamine, n-pentylamine, α-methylbutylamine, α-ethylpropylamine, β-ethylbutylamine, hexylamine, octylamine, decylamine, stearylamine, cyclohexylamine, aniline, and combinations thereof. Most preferred the amine is benzyl amine.

The diisocyanates and/or polyisocyanates which are used in the preparation of the urea crystals of the sag control agent are preferably selected from those as already disclosed above as curing agents B which are contained in the hardener component.

Thus, it is preferred to use the diisocyanates and polyisocyanates as describe in the hardener component section above. Particularly preferred are the diisocyanates disclosed therein, and even more preferred the aliphatic diisocyanates disclosed therein. Most preferred is 1,6-hexamethylene diisocyanate.

Particularly preferred are sag control agents containing urea crystals, the urea crystals being made of benzyl amine and 1,6-hexamethylene diisocyanate

The sag control agents (SCA) containing urea crystals preferably contain a further resin as a moderating resin, which is preferably present during the reaction of the isocyanate and the amine. This resin is preferably selected from poly(meth)acrylic polymers and polyester resins, most preferably poly(meth)acrylic polyols and hydroxy-functional polyester resins. The resin can also be selected from the further polymeric binders F_{b}. In case the urea formation takes place in the presence of hydroxy functional resins, part of the formed urea might not only be physically associated but also partially chemically associated with the resin, e.g., by urethan formation as a side reaction between hydroxyl groups of the resin and isocyanate groups of the diisocyanate and/or polyisocyanate.

The formation of the urea crystals is preferably carried out in the presence of such further resin and one or more aprotic organic solvents. The aprotic organic solvent being selected from those disclosed above as aprotic organic solvents Sₐ.

Preferably the sag control agents are employed in the masterbatch component.

### (Further) Coatings Additives (Fₐ)

Coating additives, described hereinafter differ from the poly(meth)acrylate polyols A, the catalysts C, the curing agents B, the aprotic or protic solvents, the afore-mentioned metal oxides and semi-metal oxides, the afore-mentioned further polymeric binders F_{b} and the sag control agents F_{SCA}.

Examples of suitable coatings additives are, e.g., UV absorbers such as, for example, 2-(2-hydroxyphenyl) benzotriazoles, 2-hydroxybenzophenones, hydroxyphenyl-s-triazines, and oxalanilides; light stabilizers such as those known as HALS compounds ("hindered amine light stabilizers"; these are derivatives of 2,2,6,6-tetramethylpiperidine; available commercially for example as Tinuvin^{®} 292 from BASF SE), benzotriazoles such as hydroxyphenylalkylbenzotriazole, or oxalanilides; radical scavengers; slip additives; polymerization inhibitors; defoamers; wetting and dispersing agents, such as silxoanes, fluorine-containing compounds, carboxylic monoesters, phosphoric esters; adhesion promoters; flow control agents; film-forming assistants such as cellulose derivatives; rheology control additives other than the SCA; and flame retardants.

The further coatings additives Fₐ are preferably present in the masterbatch component.

### Amounts

Based on the total solids content of the coating material, but excluding the coating agent B solids, the following solids amount ranges preferably apply for the ingredients:
one or more poly(meth)acrylate polyols A:
   65 to 90 wt.-%, more preferred 70 to 85 wt.-%, most preferred 72 to 82 wt;
one or more catalysts C:
   0.05 to 1 wt.-%, more preferred 0.1 to 0.75 wt.-% most preferred 0.15 to 0.5 wt.-%;
one or more metal oxides and/or semi-metal oxides, which are not organically modified:
   0 to 5 wt.-%, more preferred 0.2 to 3 wt.-% and most preferred 0.3 to 2 wt.-%;
one or more further polymeric binders F_{b}, which may be employed as such, as part of a paste containing the one or more metal oxides and/or semi-metal oxides, as part of the sag control agent, and/or as part of any other ingredient:
   0 to 30 wt.-%, more preferred 5 to 25 wt.-% and most preferred 10 to 20 wt.-%;
one or more types of urea crystals as part of a sag control agent F_{SCA}, the amount of urea crystals being calculated from the combined amount of amine and isocyanate used in the preparation for formation of the urea crystals:
   0 to 5 wt.-%, more preferred 0.2 to 3 wt.-% and most preferred 0.5 to 1.5 wt.-%; and
one or more (further) coatings additives Fₐ:
   0 to 10 wt.-%, more preferred 2 to 8 wt.-% and most preferred 3 to 7 wt.-%.

The above amounts are irrespective of whether the ingredients are employed in the masterbatch component or hardener component.

The hardener component preferably has a solids content of 50 to 100 wt.-%, more preferred 55 to 95 wt.-%. Most preferred the solids content of the hardener component equals the solids content of the one or more curing agents B in the hardener component. However, the solids content maybe lower or higher and in order to facilitate mixing the hardener composition with the master batch compositions, it is preferred that the viscosity of the hardener composition is adjusted to the same range as for the master batch composition.

The solids content of the coating material of the present invention, the master batch component, the hardener component as well as any ingredient were determined as described in the experimental section of the description.

### Mixing Ratio

To produce the ready-to-use two-pack clearcoat composition the master batch component containing the poly(meth)acrylate polyol A and the hardener component containing the diisocyanate(s) and/or polyisocyanates(s) are mixed.

The mixing ratio depends on the hydroxyl group content of the species in the master batch component and the isocyanate group content of the diisocyanate(s) and/or polyisocyanates(s) in the hardener component.

Particularly in view of interlayer adhesion, it is generally preferred that the clearcoat material has a molar OH-to-NCO ratio being from 1:0.9 to 1:2, more preferably from 1:0.9 to 1:1.5 and most preferably from 1:1 to 1:1.2.

### Method of Coating a Substrate

In the most general embodiment of the invention the method of coating a substrate comprises the steps of
i. providing an uncoated or a pre-coated substrate;
ii. applying at least one clearcoat coating material of the invention on the uncoated or pre-coated substrate provided in step i. to obtain a clearcoat layer; and
iii. curing the clearcoat layer, preferably at a temperature in the range from 40 to 90 °C.

### Substrates

The substrates used in the present invention can be uncoated or precoated and are preferably selected from metallic substrates, glass substrates and ceramic substrates, and most preferred polymeric substrates, hereinafter also referred to as plastic substrates.

### Polymeric Substrates

The polymeric substrates to be coated by the method of the invention are customary polymeric substrates such as, for example, polystyrene (PS), polyvinyl chloride (PVC), polyurethane (PUR), glass fiber-reinforced unsaturated polyesters, polymethyl methacrylate (PMMA), polyphenylene sulfide (PPS), polyoxymethylene (POM), polyphenylene ethers (PPE), polyphenylene oxide (PPO), polyurea, polybutadiene terephthalate (PBT), polycarbonate (PC), acrylonitrile-butadiene-styrene copolymers (ABS), polyolefins such as polypropylene (PP) and polypropylene (PP) modified with ethylene-propylene-diene copolymers (EPDM). Also possible in this context are polymeric substrates which comprise various of the polymers stated above, hence mixtures of these polymers. Of course, the polymeric substrates may contain fillers or may be reinforced polymeric substrates, or in form of composite materials.

The polymeric substrates may be simple plastic sheets. Also possible as substrates, and even preferred, are vehicle bodies made of plastics, or certain vehicle components, and also vehicle accessory components and vehicle components for installation in or on vehicles, for both the vehicle interior and vehicle exterior areas. Vehicles in this sense can be any kind of vehicles, such as airplanes, ships, but particularly automotive vehicles.

Prior to the application of clearcoat coating materials of the present invention, the polymeric substrates to be coated may undergo a pre-treatment and/or pre-coating. Such pre-treatment is, for example, cleaning with organic solvents or the treatment of the substrate surface with actinic radiation, sputtering, heat, by corona treatment or flame treatment.

### Other Substrates

Other substrates are, e.g., metallic substrates, such as bare steel, cold rolled steel, hot-dip galvanized steel, electrogalvanized steel, aluminum, zinc, magnesium, alloys of the afore-mentioned and the like. Metallic substrates may be precoated with one or more of a conversion coating layer, an electrodeposition coating layer, one or more primer coating layers and one or more basecoat layers, typically in this order.

Less preferred, but also possible is the use of glass or ceramic substrates.

### Application of the Clearcoat Coating Material

The application of the coating composition to a substrate, preferably a polymeric substrate optionally pre-treated and/or pre-coated as described above may take place by all customary application techniques, such as, for example, spraying, knifecoating, spreading, pouring, dipping, impregnating, trickling, or rolling, preferably by means of spray application. During such application, the polymeric substrate to be coated may per se be at rest, with the application equipment or unit being moved. Alternatively, the substrate to be coated may be moved, with the application unit being at rest relative to the substrate or being moved in an appropriate way. Preference is given to employing spray application methods, such as, for example, compressed air spraying (pneumatic application), airless spraying, high speed rotation, electrostatic spray application (ESTA), optionally in conjunction with hot spray application, such as hot air spraying, for example.

The clearcoat coating material is preferably applied in the customary and known film thicknesses, as for example in wet film thicknesses of 10 µm to 200 µm preferably of 50 µm to 150 µm. The resultant dry film thicknesses after curing are, preferably, in the range from 5 µm to 60 µm, more preferably in the range from 10 µm to 50 µm, and most preferred in the range from 15 µm to 40 µm.

In case the clearcoat composition material is applied on a precoated substrate, the coating layers of the precoated substrate are preferably fully cured or at least partially cured, particularly if the substrate is a polymeric substrate.

However, it is also possible that at least one of the coating layers of a pre-coated substrate is not fully cured. In such case, the clearcoat layer is cured simultaneously with the not yet (fully) cured coating layers onto which the clearcoat coating material of the present invention was applied.

### Curing

After the application of the clearcoat coating material of the present invention and prior to its curing, typically at least a part of the solvents contained in the coatings is evaporated at room temperature (23 °C) or at slightly elevated temperature, preferably up to 40 °C (flash-off).

The clearcoat coating material applied to the substrate, preferably the polymeric substrate is cured, thereby producing a clearcoat layer. Curing of the applied clearcoat coating material has no peculiarities in terms of method, but instead takes place in accordance with the customary and known techniques such as, for example, heating in a forced air oven or by irradiation with **IR** lamps.

Curing may take place, for example, in the region of the room temperature (23 °C) or else and preferably at elevated temperatures in the range of, for example, 40 °C to 90 °C, preferably from 50° C. to 85° C, more preferably 55 °C to 80 °C, and even more preferred 60 °C to 75 °C. The period of the curing phase as well is selected individually and is dependent on factors including the type of substrate, e.g., in case of the preferred coating of polymeric substrates, the softening temperature of the substrate must be considered, e.g., to have a longer curing period at a lower temperature. Curing may preferably take place, for example, over a time of 5 minutes to 120 minutes, more preferably 10 minutes to 40 minutes. Curing may optionally also be preceded, as described above, by a flashing phase or preliminary drying phase, at room temperature or slightly elevated temperature for a period of 1 to 60 minutes, for example. The curing conditions to be applied in the case of particular substrates are part of the general art knowledge, and so the conditions may be adapted and selected by the skilled person.

### Coated Substrate

Further subject-matter of the present invention is a coated substrate, the substrate being untreated or pre-treated, and/or uncoated or pre-coated and comprises a cured clearcoat layer as a topcoat layer, the cured clearcoat layer having been formed from a coating material of the present invention.

The pre-treatment and/or pre-coating of the substrates and the substrates themselves, are preferably the same as described above for the method of the invention.

Preferably, the coated substrate of the invention is obtained by the method of the invention.

### Use

Yet another subject-matter of the invention is the use of a solvent-based two-pack clearcoat coating material of the invention for coating of uncoated or precoated substrates, preferably polymeric substrates, preferably vehicle bodies, or parts thereof.

In the following the present invention will be further described and explained by means of comparative and inventive examples.

### EXAMPLES

In the following the testing methods used for evaluating the inventive and comparative clearcoats as well as the clearcoat materials and their ingredients are described.

### Testing Methods

### Coating Properties

### Pack Mark Resistance (PMR)

In this testing clearcoats for plastic materials are evaluated regarding their pack mark resistance. The purpose of this testing is to test in the laboratory the time-dependent surface sensitivity of coated plastic substrates or add-on parts to impressions caused by packaging materials such as woven fabric, tissue paper, packaging wipes and packaging bags used in the processes as used at customers sites.

Test panels were coated as described in the working examples and cured for 30 minutes at 60 °C, 70 °C, and 80 °C, respectively. Subsequently, the test panels were immediately placed in a standard climatic room (23°C / 50% relative humidity) and the respective test points were marked. After a waiting time of 10 to 15 min, the first test point was covered with the first sample piece of a woven fabric and loaded with a round metal test weight (500 g, diameter 5 cm, height 3 cm) to determine the "0 h" PMR value. After an aging time of 1 h, 3 h, 6 h and 24 h after removal from the oven, further specimens of the respective packaging material were placed on the marked areas on the test plate and subjected to further test weights. The load points (where the test weights were placed) were marked with a pencil on the sheet metal around the respective point. In each case, 24 h after the start of the individual load tests, the test weights and the sample of the packaging material were removed.

After removal of the last test medium, the visual evaluation of surface defects was performed. For this purpose, the surface defect was illuminated with a bright light source and the damage pattern was visually assessed. The evaluation was carried out according to DIN EN ISO 4628-1 Table 1. The surface defects were evaluated using a scale from 0 to 5, where 0 = no pack marks at all, 5 = indentations clearly visible and deep in the surface. The other values are in between these two extremes and ranked visually.

### Sanding & Polishing Test

Panels were prepared and cured in accordance with the working examples shown below and stored for 1 h after curing. Thereafter, all samples were sanded in two areas with an automized and standardized robot-sanding-machine and a conventional sanding paper. Shortly after this sanding process one area was automatically polished for 4 seconds with a state-of-the-art sponge and polishing-paste. The second area was polished the same way but for 10 seconds. After these polishing steps the remaining visible sanding marks were evaluated visually using a scale from 1 to 5. Therein, 1 = no sanding marks are visible at all, and 5 = the sanding spot is still clearly visible and the polishing only brought minor improvements. The other values are in between these two extremes and ranked visually.

### Chemical Resistance (Gradient Oven Test)

The test panels were prepared as describe in the working examples and cured for 30 minutes at 80 °C. Chemical resistance was tested according to DIN EN ISO 2812-5 (December 2018), for an aqueous 1 wt.-% sulfuric acid solution, an aqueous 10 wt.-% hydrochloric acid solution, an aqueous 5 wt.-% sodium hydroxide solution, artificial tree resin (50 % solution of colophony (CAS 8050-09-7, 94114-23-5) in pine oil (CAS 2228-95-7)), and de-ionized water. Testing temperature was 36 to 78 °C, testing time was 30 minutes. The minimum temperature when a damage of the clearcoat was observed was recorded.

### Chemical Resistance (Absorbent Medium / Droplet Method)

For all tests the test panels were prepared as describe in the working examples and cured for 30 minutes at 80 °C.

FAM testing fluid according to DIN 51604-2: 2020-02 was applied on the clearcoats in accordance with DIN EN ISO 2812-3: 2012-10 for 10 min at room temperature (23 °C). Unleaded petrol according to DIN EN 228: 2017-08 was applied on the clearcoats in accordance with DIN EN ISO 2812-3: 2012-12 for 10 min at room temperature (23 °C). Tree resin was applied on the clearcoats in accordance with DIN EN ISO 2812-4: 2007-05 (Appendix A 4.1; Method A) for 30 min at 45 °C.

De-ionized water was applied on the clearcoats in accordance with DIN EN ISO 2812-4: 2007-05 (Method A) for 60 min at 80 °C.

Before evaluation, the coated panels were stored for 1 h at room temperature (23 °C), and if visible changes are detected, they were stored for 2 hours at 60 °C (reflow conditions). The final evaluated note was the note after 1 h waiting time at room temperature. If this was not 0, then the additional reflow for 2 hours at 60 °C is applied. Also, after this additional reflow the panels/damages were evaluated making up the final result.

The rating is in accordance with DIN EN ISO 4628-1: 2016-07:
Rating 0 - unchanged, i.e., no perceptible change
Rating 1 - very slight, i.e., just perceptible change
Rating 2 - slight, i.e., clearly perceptible change
Rating 3 - moderate, i.e., very clearly perceptible change
Rating 4 - considerable, i.e., pronounced change
Rating 5 - very marked change

### Properties of the Coating Material and its Ingredients

### Solids Content

The solids content of the coating material of the present invention, the master batch component, the hardener component as well as any ingredient were determined by drying approximately 1 g of the respective sample at a temperature of 130 °C for 60 min.

### Hydroxyl Value

The hydroxyl value indicates the amount of potassium hydroxide in mg that is equivalent to the amount of acetic acid bound by 1 g of the polymeric polyols, preferably the poly(meth)acrylatepolyols on acetylation. For the determination, the sample is boiled with acetic anhydride-pyridine and the resultant acid is titrated with potassium hydroxide solution (DIN EN ISO 4629-2:2016-12).

### Weight-average Molecular Weight M_{w}

The poly(meth)acrylate polyols preferably have weight-average molecular weights M_{w} of from 1,000 to 20,000 g/mol and particularly from 1,500 to 10,000 g/mol, in each case measured by means of gel permeation chromatography (GPC). To determine polymer molecular weights by GPC, fully dissolved molecules of a polymer sample are fractionated on a porous column stationary phase. A 0.1 mol/l acetic acid solution in tetrahydofuran (THF) is used as the eluent solvent. The stationary phase is combination of Waters Styragel HR 5, HR 4, HR 3, and HR 2 columns. Five milligrams of sample are added to 1.5 mL of eluent solvent and filtered through a 0.5 µm filter. After filtering, 100 µl of the polymer sample solution is injected into the column at a flow rate of 1.0 mL/min. Separation takes place according to the size of the polymer coils which form in the eluent solvent. Small molecules diffuse into the pores of the column material more frequently and are therefore retarded more than large molecules. Thus, large molecules are eluted earlier than small molecules. The molecular weight distribution, the number-average Mₙ and weight-average M_{w} and the polydispersity M_{w}/Mₙ of the polymer samples are calculated with the aid of chromatography software utilizing a calibration curve generated with the EasyValid validation kit which includes a series of unbranched-polystyrene standards of varied molecular weights available from Polymer Standards Service.

### Theoretical Glass Transition Temperature (Flory Fox Equation)

The theoretical glass transition temperature (T_{g}) of the poly(meth)acrylate polyols was calculated. The T_{g} values of copolymers are calculated from the T_{g} values of the homopolymers of the comonomers contained therein using the Flory Fox equation. The homopolymer T_{g} values can be obtained from the Polymer Handbook, Third Edition, J. Brandup, I. H. Immergut, Chapter VI, pp. 215-225. The Flory Fox equation is based on the weight fraction of each comonomer and the T_{g} of its corresponding homopolymer as follows: $Tg of copolymer \left[{K}^{o}\right] = {\left[{\sum }_{i comonomers} \frac{{w}_{i}}{{Tg}_{i}}\right]}^{- 1}$ ${w}_{i} = weight fraction of monomer i$ ${Tg}_{i} = homopolymer Tg of monomer i \left[{K}^{o}\right]$

### Working Examples

If not indicated otherwise percentage values are weight percentage values and part are parts by weight (pbw).

### Preparation of Comparative Clearcoat Material C1 and Inventive Clearcoat Materials I1 and I2

### Master Batch Component

### Hydroxyl-Functional Poly(meth)acrylate A_{I} as used in Inventive Examples 11 and 12

A mixture of ethylenically unsaturated monomers consisting of 12 pbw of butyl methacrylate, 18 pbw of cyclohexyl methacrylate, 1 pbw of acrylic acid, 22 pbw of hydroxyethyl methacrylate, 27 pbw of hydroxypropyl methacrylate and 20 pbw of styrene were polymerized in 67.5 pbw of ethyl ethoxy propionate in the presence of 3.5 pbw of di-tert.-butyl peroxide.

The resulting polymer A has a hydroxyl value of 200 mg KOH/g, a weight-average molecular weight of 4150 g/mol and a theoretical glass transition temperature according of 69 °C.

### Hydroxy-Functional Poly(meth)acrylate A_{C1} as used in Comparative Example C1

Polymerization product of methyl methacrylate, hydroxyethyl methacrylate, styrene and acrylic acid in the presence of di-tert.-butyl peroxide, reacted with Cardura E10, having a hydroxyl value of 150 mg KOH/g, a weight-average molecular weight of 9250 g/mol and a theoretical glass transition temperature of 69 °C. Solids content 59.5 wt.-% in aprotic solvent mix (methoxy propyl acetate and Solvent Naphtha 160/180).

### Hydroxy-Functional Poly(meth)acrylate A_{C2} as used in Comparative Example C1

Polymerization product of butyl methacrylate, 2-ethylhexyl methacrylate, cyclohexyl methacrylate, hydroxypropyl methacrylate, butanediol monoacrylate, acrylic acid and styrene in the presence of di-tert.-butyl peroxide, having a hydroxyl value 203 mg KOH/g, a weight-average molecular weight 3600 g/mol and a theoretical glass transition temperature of 30 °C. Solids content 65.1 wt.-% in aprotic solvent mix (methoxy propyl acetate and Solvent Naphtha 160/180).

### Hydroxy-Functional Poly(meth)acrylate A_{C3} as used in Comparative Example C1

Polymerization product of butyl acrylate, butyl methacrylate, hydroxyethyl methacrylate, butanediol monoacrylate, acrylic acid and styrene in the presence of di-tert.-butyl peroxide, having a hydroxyl value 116 mg KOH/g, a weight-average molecular weight 8750 g/mol and a theoretical glass transition temperature of 1.5 °C. Solids content 60.0 wt.-% in Solvent Naphtha 160/180.

### Hydroxy-Functional Poly(meth)acrylate A_{C4} as used in Comparative Example C1

Polymerization product of hydroxyethyl acrylate and ethylhexyl acrylate in the presence of di-tert.-butyl peroxide, having a hydroxyl value 130 mg KOH/g, a weight-average molecular weight 4500 g/mol and a theoretical glass transition temperature of -70 °C. Solids content 67.2 wt.-% in Solvent Naphtha 165/185.

### Hydroxy-Functional Poly(meth)acrylate A_{C5} with urea crystals

Polymerization product of butyl acrylate, hydroxyethyl acrylate, lauryl methacrylate, methacrylic acid and styrene in the presence of di-tert.-butyl peroxide in Solvent Naphtha 160/180. Therein subsequent formation of urea crystals from hexamethylene diisocyanate and benzylamine in the presence of the polymerization product and butyl acetate. The resulting product having a hydroxyl value 105 mg KOH/g, a weight-average molecular weight 10500 g/mol and a theoretical glass transition temperature of 4 °C. Total solids content 59.0 wt.-%. Urea crystal content 4 wt.-% based on the total weight of the preparation.

### Hydrophilic Oxide Paste (Hydrophilic Silica Paste) P

First a hydroxy-functional poly(meth)acrylate A_{C6} is produced by polymerization of hydroxypropyl methacrylate, hydroxyethyl methacrylate, butyl methacrylate, cyclohexyl methacrylate, acrylic acid and styrene in the presence of tert.-butyl-peroxy-2-ethylhexanoate in Solvent Naphtha 160/180 and butyl acetate. The resulting product A_{C6} having a hydroxyl value 156 mg KOH/g, a weight-average molecular weight of 4200 g/mol and a theoretical glass transition temperature of 66 °C. The solids content was 55.0 wt.-%.

57 pbw of A_{C6} were diluted in 9.3 parts by weight of butyl acetate. Added to this mixture were 8.7 parts by weight of Aerosil^{®} 380 (commercial hydrophilic silica having an average primary particle size of 7 nm and a specific BET surface area of 380 m²/g, from Evonik) and further 25 pbw of A_{C6}. This was followed by the homogenization of the resultant mixture in a dissolver. Finally, the mixture was ground in an agitator mill (model ZWM 46, grinding media 0.6-0.8 mm, type ER 120 A, fill level 85) with an energy input of 0.18 kWh per kg of milling charge, with a maximum paste temperature of 65 °C.

The ingredients of the master batch component of comparative clearcoat coating material C1 and inventive clearcoat coating materials I1 and I2 are shown in the following **Table 1.**

**Table 1 - Master Batch Component**

| **Ingredients** | **Type** | **C1** | **I1** | **I2** |
|---|---|---|---|---|
| Hydroxyl-Functional Poly(meth)acrylate | A_{I} | - | 56.20 | 56.20 |
| Hydroxyl-Functional Poly(meth)acrylate | A_{C1} | 21.80 | - | - |
| Hydroxyl-Functional Poly(meth)acrylate | A_{C2} | 21.80 | - | - |
| Hydroxyl-Functional Poly(meth)acrylate | A_{C3} | 6.30 | - | - |
| Hydroxyl-Functional Poly(meth)acrylate | A_{C4} | 4.10 | - | - |
| Hydroxyl-Functional Poly(meth)acrylate (55 wt.-%) containing urea crystals (4 wt.-%) | A_{C5} | 11.60 | 11.60 | 7.60 |
| Zn-Neodecanoate (100 wt.-%) | C_{I} | - | 0.20 | 0.20 |
| Bi-Neodecanoate (58 wt.-% in neodecanoic acid) | C_{C} | 0.02 | - | - |
| Aprotic Solvent Mixture (butylglycol acetate, ethyl ethoxy propionate, cyclohexanon, white spirit 100/140; 12/7/9/6, w/w/w/w) | Sₐ | 17.80 | 16.99 | 16.99 |
| Butyl Acetate | Sₐ | 2.81 | 12.24 | 12.24 |
| Hydrophilic Silica Paste | P | - | - | 4.00 |
| Protic Solvent Mixture (methoxy propanol, glycolic acid butyl ester, propylene glycol; 15/5/2, w/w/w) | Sₚ | 11.00 | - | - |
| Leveling Agent (52 wt.-% in 1:1 (w/w) 2-phenoxyethanol and 2-methoxy-1-methylethylacetate)) | D | 0.16 | 0.16 | 0.16 |
| UV absorber | D | 1.23 | 1.23 | 1.23 |
| Hindered Amine Light Stabilizer | D | 0.92 | 0.92 | 0.92 |
| Coco alkyl dimethyl benzyl ammoniumchloride | D | 0.46 | 0.46 | 0.46 |
| *Sum* | | 100.00 | 100.00 | 100.00 |

### Hardener Component

### Curing Agent

As a curing agent a 67.5 wt.-% solution of hexamethylene diisocyanate trimer (HDI-trimer) in a 1:1 (w/w) butyl acetate/Solvent Naphtha (160/180) mixture was used.

### Mixing of Master Batch Component and Hardener Component

The clearcoat coating materials C1, I1 and I2 were prepared by mixing the respective part by weight of the master batch component and the hardener component as indicated in **Table 2.** Mixing of the two components was performed by use of a static mixing device.

**Table 2 - Two-Pack Coating Material**

| | **C1** | **I1** | **I2** |
|---|---|---|---|
| Master Batch Component | 100.00 | 100.00 | 100.00 |
| Hardener Component | 35.00 | 39.00 | 39.00 |

### Test Panel Preparation

An electrocoated steel panel was coated with a water-borne black unicolor basecoat material (dry film thickness 10 to 15 µm). After a flash-off for 10 min at room temperature (23 °C) the basecoat material was cured in a convection oven for at least 10 minutes at 60 °C. The thus coated panels were cooled to room temperature and coated with the respective clearcoat materials (dry film thickness 30 ± 5 µm. After a flash-off for 10 min at room temperature (23 °C) the clearcoat material was cured in a convection oven for 30 minutes at 60 °C, 70 °C or 80 °C as indicated in the section "Testing Methods" and the tables below.

### Results

**Table 3 - Pack Mark Resistance (PMR)**

| | **Examples** | | | |
|---|---|---|---|---|
| | **C1** | **I1** | | |
| Curing for 30 minutes at | 80 °C | 60 °C | 70 °C | 80 °C |
| PMR after 0 h | 5 | 4 | 2 | 0 |
| PMR after 1 h | 5 | 4 | 2 | 0 |
| PMR after 3 h | 5 | 4 | 2 | 0 |
| PMR after 6 h | 5 | 4 | 2 | 0 |
| PMR after 24 h | 5 | 2 | 1 | 0 |

The pack mark resistance test **(Table 3)** clearly shows that the inventive clearcoat layer obtained from coating material I1, even if cured at just 60 °C, compared to 80 °C at which the comparative clearcoat layer obtained from comparative clearcoat material C1 was cured, has an improved pack mark resistance. If cured at 80 °C the inventive clearcoat layer is perfectly resistant to pack marks, while the comparative coating layer still lacks any pack mark resistance after 24 h, if cured at 80 °C.

**Table 4 - Sanding & Polishing**

| | **Examples** | | | |
|---|---|---|---|---|
| | **C1** | **I1** | | |
| Curing for 30 minutes at | 80 °C | 60 °C | 70 °C | 80 °C |
| After 4 seconds polishing | 5 | 3 | 3 | 4 |
| After 10 seconds polishing | 4 | 2 | 1 | 1 |

In the sanding and polishing test **(Table 4)** the inventive clearcoat layer obtained from inventive clearcoat material I1 shows no sanding marks at all after 10 seconds of polishing, even if cured at a temperature of only 70 °C, while the comparative clearcoat layer obtained from comparative clearcoat material C1 cured at 80 °C shows significant sanding marks.

**Table 5 - Chemical Resistance (gradient oven)**

| Testing Substance | **Examples** | | |
|---|---|---|---|
| | **C1** | **I1** | **I2** |
| H₂SO₄ (1 wt.-% in water) | 47 °C | 46 °C | 47 °C |
| HCl (10 wt.-% in water) | 58 °C | >78 °C | >78 °C |
| NaOH (5 wt.-% in water) | 39 °C | 44 °C | 43 °C |
| Tree Resin | <36 °C | 40 °C | 43 °C |
| De-Ionized Water | 53 °C | 61 °C | 57 °C |

The chemical resistance according to the gradient oven test **(Table 5)** shows an improved chemical resistance to highly concentrated acids, such as 10 wt.-% HCl in water and a 5 wt.-% sodium hydroxide solution in water. Moreover, the resistance towards tree resin is particularly improved for the inventive clearcoat layer obtained from inventive clearcoat material I2, containing hydrophilic silica. It is particularly surprising that a hydrophilic semi-metal oxide, such as hydrophilic silica, which is typically used as a rheological agent is apt to improve tree resin resistance of the clearcoat layer. However, even the inventive clearcoat material I1 not containing hydrophilic silica shows an improvement with respect to tree resin.

**Table 6 - Chemical Resistance (absorbent medium method / droplet method)**

| | **Examples** | | | | |
|---|---|---|---|---|---|
| | **C1** | **I1** | | **I2** | |
| Curing for 30 minutes at | 80 °C | 70 °C | 80 °C | 70 °C | 80 °C |
| FAM* | 1.5 | 2.0 | 1.5 | 1.5 | 0.5 |
| E10** | 2.0 | 2.0 | 1.25 | 1.5 | 1.5 |
| Tree Resin** | 3.0 | 2.0 | 2.0 | 2.0 | 2.0 |
| De-Ionized Water** | 2.0 | 1.75 | 0.25 | 0.0 | 0.0 |

| | | | | | |
|---|---|---|---|---|---|
| *average of 2 tests; **average of 4 tests | | | | | |

In the second chemical resistance test **(Table 6)** improvements are also particularly evident for the hydrophilic silica containing clearcoat layer even if cured at 70 °C, only.

Thus, chemical resistance is clearly improved for the clearcoat layers obtained according to the present invention, even if cured at lower temperatures.

## Claims

1. Solvent-based two-pack clearcoat coating material, comprising:
a Master batch component comprising
i.a. one or more poly(meth)acrylate polyols A, the poly(meth)acrylate
polyols A having a hydroxyl value determined according to the method identified in the specification in the range from 160 to 240 mg
KOH/g and a weight-average molecular weight determined according to the method identified in the specification in the range from 1000 to 7000 g/mol; and
ii.a. one or more catalysts C for crosslinking hydroxyl groups with free isocyanate groups; and
a hardener component comprising
i.b. one or more curing agents B selected from the group consisting of diisocyanates and polyisocyanates;
and
one or more aprotic organic solvents, which can be contained in the master batch component, the hardener component, or in the master batch component and in the hardener component, and
0 to 10 wt-% of protic solvents in the master batch component, based on the combined amount of the aprotic organic solvents and protic solvents contained in coating material.

2. The coating material according to claim 1, **characterized in that** the master batch component further comprises
iii.a. one or more metal oxides and/or semi-metal oxides, not being organically modified.

3. The coating material according to claim 1 or 2, **characterized in that** the poly(meth)acrylate polyols A comprise in polymerized form the following monomers
a) one or more (meth)acrylic acid esters selected from alkyl (meth)acrylates and cycloalkyl (meth)acrylates;
b) one or more hydroxyalkyl (meth)acrylates; and
c) one or more vinyl aromatic monomers.

4. The coating material according to claim 3, **characterized in that** the poly(methyl)methacrylate polyols A further comprise in polymerized form d) acrylic acid and/or methacrylic acid.

5. The coating material according to claim 3 or 4, **characterized in that** the poly(meth)acrylate polyol comprises in polymerized form the following amounts of monomers
a) 20 to 40 wt.-%, preferably 25 to 35 wt.-% of the one or more (meth)acrylic acid esters selected from alkyl (meth)acrylates and cycloalkyl (meth)acrylates;
b) 40 to 60 wt.-%, preferably 45 to 55 wt.-% of one or more hydroxyalkyl (meth)acrylates;
c) 10 to 30 wt.-%, preferably 15 to 25 wt.-% of one or more vinyl aromatic monomers; and
d) 0 to 5 wt.-%, preferably 0.5 to 4 wt.-% of acrylic acid and/or methacrylic acid;
the weight percentages being based on the total amount of all monomers being present in polymerized form in the poly(meth)acrylate polyol.

6. The coating material according to any one or more of claims 3 to 5, **characterized in that** the
a) alkyl (meth)acrylates are selected from C₁-C₈-alkyl (meth)acrylates and the cycloalkyl (meth)acrylates are selected from C₃-C₁₀-cycloalkyl (meth)acrylates;
b) one or more hydroxylalkyl (meth)acrylates are selected from C₂-C₈-hydroxyalkyl (meth)acrylates; and
c) one or more vinyl aromatic monomers are selected from styrene and alpha-methylstyrene.

7. The coating material according to any one or more of claims 1 to 6, **characterized in that** the poly(meth)acrylate polyol A has a theoretical glass transition temperature according to the Flory-Fox equation from 50 to 100 °C.

8. The coating material according to any one or more of claims 1 to 7, **characterized in that** the poly(meth)acrylate polyol A has
a hydroxyl value determined according to the method identified in the specification in the range of 170 to 230 mg KOH/g, preferably 180 to 220 mg KOH/g; and/or
a weight-average molecular weight determined according to the method identified in the specification in the range of 1500 to 6500 g/mol,
preferably 2000 to 6000 g/mol; and/or
a theoretical glass transition temperature according to the Flory-Fox equation from 55 to 95 °C, preferably 60 to 90 °C.

9. The coating material according to any one or more of claims 1 to 8, **characterized in that** the one or more catalysts C are selected from the group consisting tertiary amines, inorganic metal containing catalysts and organic metal containing catalysts.

10. The coating material according to claim 9, wherein the organic metal containing catalysts is selected from the group consisting of zinc and bismuth salts of linear or branched, preferably branched monocarboxylic acids, the monocarboxylic acid containing 4 to 14 carbon atoms.

11. The coating material according to any one or more of claims 1 to 10, **characterized in that** the one or more curing agents B are selected from the group of aliphatic diisocyanates and aliphatic polyisocyanates.

12. The coating material according to any one or more of claims 1 to 11, **characterized in that** the polyisocyanate is trimer of a diisocyanate.

13. The coating material according to any one or more of claims 1 to 12, **characterized in that** it further contains a sag control agent, the sag control agent comprising urea crystals.

14. The coating material according to any one or more of claims 2 to 13, **characterized in that** the one or more metal oxides and/or semi-metal oxides, which are not organically modified are selected from the group consisting of silicas, aluminas and zirconias.

15. The coating material according to any one or more of claims 1 to 14, **characterized in that** it comprises the following solids amounts based on the solids content determined according to the method identified in the specification of the solvent-based two-pack clearcoat coating material minus the solids amount of curing agent B:
65 to 90 wt.-% of the one or more poly(meth)acrylate polyols A;
0.05 to 1 wt.-% of the one or more catalysts C;
0 to 5 wt.-% of the one or more metal oxides and/or semi-metal oxides, which are not organically modified;
0 to 30 wt.-% of further polymeric binders differing from the one or more poly(meth)acrylate polyols A;
0 to 5 wt.-% of urea crystals; and
0 to 10 wt.-% of coatings additives differing from the one or more poly(meth)acrylate polyols A, the one or more catalysts C, the one or more metal oxides and/or semi-metal oxides, which are not organically modified, further polymeric binders differing from the one or more poly(meth)acrylate polyols A and urea crystals; and
which comprises the following solids amounts based on the solids content in the hardener composition:
50 to 100 wt.-% of the one or more curing agents B; and/or that the molar ratio of OH groups contained in the one or more poly(meth)acrylate polyols A to the NCO groups in the one or more curing agents B is in the range from 1:0.9 to 1:2.

16. Method of coating a substrate comprising the steps of
i. providing an uncoated or a pre-coated substrate;
ii. applying at least one solvent-based two-pack clearcoat coating material as defined in any one or more of claims 1 to 15 on the uncoated or pre-coated substrate provided in step i. to obtain a clearcoat layer; and
iii. curing the clearcoat layer.

17. The method according to claim 16, wherein curing the clearcoat layer is carried out at a temperature in the range from 40 to 90 °C.

18. The method according to claim 17, **characterized in that** the substrate is a polymeric substrate, preferably a vehicle body or a part thereof.

19. A coated substrate, the substrate being uncoated or pre-coated and comprising a cured clearcoat layer as a topcoat layer, the cured clearcoat layer having been formed from coating material as defined in any one or more of claims 1 to 15, and the substrate being a metallic substrate, a glass substrate, ceramic substrate, or a polymeric substrate.

20. Use of a solvent-based two-pack clearcoat coating material as defined in any one or more of claims 1 to 15 for coating of uncoated or precoated substrates, preferably vehicle bodies, or parts thereof.

## Patentansprüche

1. Lösemittelbasiertes Zweikomponenten-Klarlack-Beschichtungsmaterial, umfassend:
eine Masterbatch-Komponente, die Folgendes umfasst
i.a. ein oder mehrere Poly(meth)acrylatpolyole A, wobei die Poly(meth)acrylatpolyole A eine nach der in der Spezifikation angegebenen Vorschrift bestimmte Hydroxylzahl im Bereich von 160 bis 240 mg KOH/g und ein nach der in der Spezifikation angegebenen Vorschrift bestimmtes gewichtsmittleres Molekulargewicht im Bereich von 1000 bis 7000 g/mol aufweisen; und
ii.a. einen oder mehrere Katalysator(en) C zur Vernetzung von Hydroxylgruppen mit freien Isocyanatgruppen; und
eine Härterkomponente, umfassend
i.b. ein oder mehrere Härter B, ausgewählt aus der Gruppe bestehend aus Diisocyanaten und Polyisocyanaten;
und
ein oder mehrere aprotische organische Lösemittel, die in der Masterbatch-Komponente, der Härterkomponente oder
in der Masterbatch-Komponente und in der Härterkomponente enthalten sein können, und
0 bis 10 Gew.-% protische Lösemittel in der Masterbatch-Komponente, bezogen auf die kombinierte Menge der aprotischen organischen Lösemittel und protischen Lösemittel, die im Beschichtungsmaterial enthalten sind.

2. Beschichtungsmaterial nach Anspruch 1, **dadurch gekennzeichnet, dass** die Masterbatch-Komponente ferner umfasst
iii.a. ein oder mehrere Metalloxide und/oder Halbmetalloxide, die nicht organisch modifiziert sind.

3. Beschichtungsmaterial nach Anspruch 1 oder 2, **dadurch gekennzeichnet, dass** die Poly(meth)acrylatpolyole A in polymerisierter Form die folgenden Monomere enthalten
a) einen oder mehrere (Meth)acrylsäureester, ausgewählt aus Alkyl(meth)acrylaten und Cycloalkyl(meth)acrylaten;
b) ein oder mehrere Hydroxyalkyl(meth)acrylate; und
c) ein oder mehrere vinylaromatische Monomere.

4. Beschichtungsmaterial nach Anspruch 3, **dadurch gekennzeichnet, dass** die Poly(methyl)methacrylatpolyole A weiterhin in polymerisierter Form enthalten d) Acrylsäure und/oder Methacrylsäure.

5. Beschichtungsmaterial nach Anspruch 3 oder 4, **dadurch gekennzeichnet, dass** das Poly(meth)acrylatpolyol in polymerisierter Form folgende Mengen an Monomeren enthält
a) 20 bis 40 Gew.-%, vorzugsweise 25 bis 35 Gew.-% des einen oder der mehreren (Meth)acrylsäureester, ausgewählt aus Alkyl(meth)acrylaten und Cycloalkyl(meth)acrylaten;
b) 40 bis 60 Gew.-%, vorzugsweise 45 bis 55 Gew.-% eines oder mehrerer Hydroxyalkyl(meth)acrylate;
c) 10 bis 30 Gew.-%, vorzugsweise 15 bis 25 Gew.-% eines oder mehrerer vinylaromatischer Monomere; und
d) 0 bis 5 Gew.-%, vorzugsweise 0,5 bis 4 Gew.-% Acrylsäure und/oder Methacrylsäure;
wobei die Gewichtsprozente sich auf die Gesamtmenge aller Monomeren beziehen, die in polymerisierter Form im Poly(meth)acrylatpolyol vorliegen.

6. Beschichtungsmaterial nach einem oder mehreren der Ansprüche 3 bis 5, **dadurch gekennzeichnet, dass** die
a) Alkyl(meth)acrylate ausgewählt sind aus C₁-C₈-Alkyl(meth)acrylaten und die Cycloalkyl(meth)acrylate ausgewählt sind aus C₃-C₁₀-Cycloalkyl(meth)acrylaten;
b) ein oder mehrere Hydroxylalkyl(meth)acrylate ausgewählt sind aus C₂-C₈-Hydroxyalkyl(meth)acrylaten; und
c) ein oder mehrere vinylaromatische Monomere ausgewählt sind aus Styrol und alpha-Methylstyrol.

7. Beschichtungsmaterial nach einem oder mehreren der Ansprüche 1 bis 6, **dadurch gekennzeichnet, dass** das Poly(meth)acrylatpolyol A eine theoretische Glasübergangstemperatur gemäß der Flory-Fox-Gleichung von 50 bis 100 °C aufweist.

8. Beschichtungsmaterial nach einem oder mehreren der Ansprüche 1 bis 7, **dadurch gekennzeichnet, dass** das Poly(meth)acrylatpolyol A eine nach der in der Spezifikation angegebenen Vorschrift bestimmte Hydroxylzahl im Bereich von 170 bis 230 mg KOH/g, vorzugsweise 180 bis 220 mg KOH/g; und/oder ein nach der in der Spezifikation angegebenen Vorschrift ermitteltes gewichtsmittleres Molekulargewicht im Bereich von 1500 bis 6500 g/mol, vorzugsweise 2000 bis 6000 g/mol; und/oder
eine theoretische Glasübergangstemperatur nach der Flory-Fox-Gleichung von 55 bis 95 °C, vorzugsweise 60 bis 90 °C, aufweist.

9. Beschichtungsmaterial nach einem oder mehreren der Ansprüche 1 bis 8, **dadurch gekennzeichnet, dass** der eine oder die mehreren Katalysatoren C ausgewählt sind aus der Gruppe bestehend aus tertiären Aminen, anorganischen metallhaltigen Katalysatoren und organischen metallhaltigen Katalysatoren.

10. Beschichtungsmaterial nach Anspruch 9, **dadurch gekennzeichnet, dass** die organischen metallhaltigen Katalysatoren ausgewählt sind aus der Gruppe bestehend aus Zink- und Wismutsalzen linearer oder verzweigter, vorzugsweise verzweigter Monocarbonsäuren, wobei die Monocarbonsäure 4 bis 14 Kohlenstoffatome enthält.

11. Beschichtungsmaterial nach einem oder mehreren der Ansprüche 1 bis 10, **dadurch gekennzeichnet, dass** der eine oder die mehreren Härter B ausgewählt sind aus der Gruppe von aliphatischen Diisocyanaten und aliphatischen Polyisocyanaten.

12. Beschichtungsmaterial nach einem oder mehreren der Ansprüche 1 bis 11, **dadurch gekennzeichnet, dass** das Polyisocyanat Trimer eines Diisocyanats ist.

13. Beschichtungsmaterial nach einem oder mehreren der Ansprüche 1 bis 12, **dadurch gekennzeichnet, dass** es weiterhin ein Mittel zum Eindämmen des Nachdunkelns enthält, wobei das Mittel zum Eindämmen des Nachdunkelns Harnstoffkristalle umfasst.

14. Beschichtungsmaterial nach einem oder mehreren der Ansprüche 2 bis 13, **dadurch gekennzeichnet, dass** das eine oder die mehreren Metalloxide und/oder Halbmetalloxide, die nicht organisch modifiziert sind, ausgewählt sind aus der Gruppe bestehend aus Kieselsäuren, Tonerden und Zirkonerden.

15. Beschichtungsmaterial nach einem oder mehreren der Ansprüche 1 bis 14, **dadurch gekennzeichnet, dass** es die folgenden Feststoffmengen bezogen auf den nach der in der Spezifikation des lösemittelbasierten Zweikomponenten-Klarlack-Beschichtungsmaterials angegebenen Vorschrift ermittelten Feststoffgehalt abzüglich der Feststoffmenge des Härters B umfasst:
65 bis 90 Gew.-% des einen oder der mehreren Poly(meth)acrylatpolyole A;
0,05 bis 1 Gew.-% des einen oder der mehreren Katalysatoren C;
0 bis 5 Gew.-% des einen oder der mehreren Metalloxide und/oder Halbmetalloxide, die nicht organisch modifiziert sind;
0 bis 30 Gew.-% weiterer polymerer Bindemittel, die von dem einen oder den mehreren Poly(meth)acrylatpolyolen A verschieden sind;
0 bis 5 Gew.-% Harnstoffkristalle; und
0 bis 10 Gew.-% Lackadditive, die verschieden sind von dem einen oder den mehreren Poly(meth)acrylatpolyolen A, dem einen oder den mehreren Katalysatoren C, dem einen oder den mehreren Metalloxiden und/oder Halbmetalloxiden, die nicht organisch modifiziert sind, weiteren von dem einen oder den mehreren Poly(meth)acrylatpolyolen A und Harnstoffkristallen verschiedenen polymeren Bindemitteln; und
das die folgenden Feststoffmengen, bezogen auf den Feststoffgehalt in der Härterzusammensetzung, umfasst: 50 bis 100 Gew.-% des einen oder der mehreren Härter(s) B; und/oder
dass das Molverhältnis der in dem einen oder den mehreren Poly(meth)acrylatpolyolen A enthaltenen OH-Gruppen zu den NCO-Gruppen in dem einen oder den mehreren Härter(n) B im Bereich von 1:0,9 bis 1:2 liegt.

16. Verfahren zum Beschichten eines Substrats, umfassend folgende Schritte
i. Bereitstellen eines unbeschichteten oder eines vorbeschichteten Substrats;
ii. Aufbringen mindestens eines lösemittelbasierten Zweikomponenten-Klarlack-Beschichtungsmaterials, wie in einem oder mehreren der Ansprüche 1 bis 15 definiert, auf das in Schritt i. bereitgestellte unbeschichtete oder vorbeschichtete Substrat, um eine Klarlackschicht zu erhalten; und
iii. Härten der Klarlackschicht.

17. Verfahren nach Anspruch 16, **dadurch gekennzeichnet, dass** das Härten der Klarlackschicht bei einer Temperatur im Bereich von 40 °C bis 90 °C durchgeführt wird.

18. Verfahren nach Anspruch 17, **dadurch gekennzeichnet, dass** das Substrat ein Polymersubstrat ist, vorzugsweise eine Fahrzeugkarosserie oder ein Teil davon.

19. Beschichtetes Substrat, wobei das Substrat unbeschichtet oder vorbeschichtet ist und eine gehärtete Klarlackschicht als eine Deckschicht umfasst, wobei die gehärtete Klarlackschicht aus Beschichtungsmaterial gemäß einem oder mehreren der Ansprüche 1 bis 15 gebildet wurde und das Substrat ein metallisches Substrat, ein Glassubstrat, ein Keramiksubstrat oder ein Polymersubstrat ist.

20. Verwendung eines lösemittelbasierten Zweikomponenten-Klarlack-Beschichtungsmaterials gemäß einem oder mehreren der Ansprüche 1 bis 15 zur Beschichtung von unbeschichteten oder vorbeschichteten Substraten, vorzugsweise Fahrzeugkarosserien oder Teilen davon.

## Revendications

1. Matériau de revêtement transparent bicomposant à base de solvant, comprenant :
a. un composant mélange-maître comprenant
i.a. un ou plusieurs poly(méth)acrylate-polyols A, les poly(méth)acrylate-polyols A présentant un indice d'hydroxyle déterminé selon la méthode identifiée dans la spécification compris entre 160 et 240 mg KOH/g et un poids moléculaire moyen en poids déterminé selon la méthode identifiée dans la spécification compris entre 1 000 et 7 000 g/mol ; et
ii.a. un ou plusieurs catalyseurs C pour la réticulation de groupes hydroxyle avec des groupes isocyanate libres ; et
un composant durcisseur comprenant
i.b. un ou plusieurs durcisseurs B choisis dans le groupe constitué par les diisocyanates et les polyisocyanates ; et
un ou plusieurs solvants organiques aprotiques, qui peuvent être contenus dans le composant mélange-maître, le composant durcisseur, ou dans le composant mélange-maître et dans le composant durcisseur, et
0 à 10 % en poids de solvants protiques dans le composant mélange-maître, rapporté à la quantité combinée des solvants organiques aprotiques et des solvants protiques contenus dans le matériau de revêtement.

2. Matériau de revêtement selon la revendication 1, **caractérisé en ce que** le composant mélange-maître comprend en outre
iii.a. un ou plusieurs oxydes métalliques et/ou oxydes semi-métalliques qui ne portent pas de modifications organiques.

3. Matériau de revêtement selon la revendication 1 ou 2, **caractérisé en ce que** les poly(méth)acrylate-polyols A comprennent sous forme polymérisée les monomères suivants :
a) un ou plusieurs esters d'acide (méth)acrylique choisis parmi les (méth)acrylates d'alkyle et les (méth)acrylates de cycloalkyle ;
b) un ou plusieurs (méth)acrylates d'hydroxyalkyle ; et
c) un ou plusieurs monomères vinylaromatiques.

4. Matériau de revêtement selon la revendication 3, **caractérisé en ce que** les poly(méthyl)méthacrylate-polyols A comprennent en outre sous forme polymérisée d) de l'acide acrylique et/ou de l'acide méthacrylique.

5. Matériau de revêtement selon la revendication 3 ou 4, **caractérisé en ce que** le poly(méth)acrylate-polyol comprend sous forme polymérisée les quantités suivantes de monomères :
a) 20 à 40 % en poids, de préférence 25 à 35 % en poids du ou des esters d'acide (méth)acrylique choisis parmi les (méth)acrylates d'alkyle et les (méth)acrylates de cycloalkyle ;
b) 40 à 60 % en poids, de préférence 45 à 55 % en poids d'un ou plusieurs (méth)acrylates d'hydroxyalkyle ;
c) 10 à 30 % en poids, de préférence 15 à 25 % en poids d'un ou plusieurs monomères vinylaromatiques ; et
d) 0 à 5 %, de préférence 0,5 à 4 % en poids d'acide acrylique et/ou d'acide méthacrylique ;
les pourcentages pondéraux se rapportant à la quantité totale de tous les monomères présents sous forme polymérisée dans le poly(méth)acrylate-polyol.

6. Matériau de revêtement selon l'une quelconque ou plusieurs des revendications 3 à 5, **caractérisé en ce que**
a) les (méth)acrylates d'alkyle sont choisis parmi les (méth)acrylates d'alkyle en C₁-C₈ et les (méth)acrylates de cycloalkyle sont choisis parmi les (méth)acrylates de cycloalkyle en C₃-C₁₀ ;
b) un ou plusieurs (méth)acrylates d'hydroxyalkyle sont choisis parmi les (méth)acrylates d'hydroxyalkyle en C₂-C₈ ; et
c) un ou plusieurs monomères vinylaromatiques sont choisis parmi le styrène et l'alpha-méthylstyrène.

7. Matériau de revêtement selon l'une quelconque ou plusieurs des revendications 1 à 6, **caractérisé en ce que** le poly(méth)acrylate-polyol A présente une température de transition vitreuse théorique selon l'équation de Flory-Fox de 50 à 100 °C.

8. Matériau de revêtement selon l'une quelconque ou plusieurs des revendications 1 à 7, **caractérisé en ce que** le poly(méth)acrylate-polyol A présente un indice d'hydroxyle déterminé selon la méthode identifiée dans la spécification compris entre 170 et 230 mg KOH/g, de préférence entre 180 et 220 mg KOH/g ; et/ou un poids moléculaire moyen en poids déterminé selon la méthode identifiée dans la spécification compris entre 1 500 et 6 500 g/mol, de préférence entre 2 000 et 6 000 g/mol ; et/ou
une température de transition vitreuse théorique selon l'équation de Flory-Fox de 55 à 95 °C, de préférence de 60 à 90 °C.

9. Matériau de revêtement selon l'une quelconque ou plusieurs des revendications 1 à 8, **caractérisé en ce que** le ou les catalyseurs C sont choisis dans le groupe constitué par les amines tertiaires, les catalyseurs contenant un métal inorganique et les catalyseurs contenant un métal organique.

10. Matériau de revêtement selon la revendication 9, dans lequel les catalyseurs contenant un métal organique sont choisis dans le groupe constitué par les sels de zinc et de bismuth d'acides monocarboxyliques linéaires ou ramifiés, de préférence ramifiés, l'acide monocarboxylique contenant 4 à 14 atomes de carbone.

11. Matériau de revêtement selon l'une quelconque ou plusieurs des revendications 1 à 10, **caractérisé en ce que** le ou les durcisseurs B sont choisis dans le groupe des diisocyanates aliphatiques et des polyisocyanates aliphatiques.

12. Matériau de revêtement selon l'une quelconque ou plusieurs des revendications 1 à 11, **caractérisé en ce que** le polyisocyanate est un trimère d'un diisocyanate.

13. Matériau de revêtement selon l'une quelconque ou plusieurs des revendications 1 à 12, **caractérisé en ce qu'**il contient en outre un agent de contrôle de l'affaissement, l'agent de contrôle de l'affaissement comprenant des cristaux d'urée.

14. Matériau de revêtement selon l'une quelconque ou plusieurs des revendications 2 à 13, **caractérisé en ce que** le ou les oxydes métalliques et/ou oxydes semi-métalliques qui ne portent pas de modifications organiques sont choisis dans le groupe constitué par les silices, les alumines et les zircones.

15. Matériau de revêtement selon l'une quelconque ou plusieurs des revendications 1 à 14, **caractérisé en ce qu'**il comprend les quantités de matières solides suivantes, rapportées à la teneur en matières solides déterminée selon la méthode identifiée dans la spécification du matériau de revêtement transparent bicomposant à base de solvant diminuée de la quantité de matières solides du durcisseur B :
65 à 90 % en poids du ou des poly(méth)acrylate-polyols A ;
0,05 à 1 % en poids du ou des catalyseurs C ;
0 à 5 % en poids du ou des oxydes métalliques et/ou oxydes semi-métalliques qui ne portent pas de modifications organiques ;
0 à 30 % en poids d'autres liants polymères différents du ou des poly(méth)acrylate-polyols A ;
0 à 5 % en poids de cristaux d'urée ; et
0 à 10 % en poids d'additifs de revêtement différents du ou des poly(méth)acrylate-polyols A, du ou des catalyseurs C, du ou des oxydes métalliques et/ou oxydes semi-métalliques qui ne portent pas de modifications organiques, des autres liants polymères différents du ou des poly(méth)acrylate-polyols A et des cristaux d'urée ; et
qui comprend les quantités de matières solides suivantes, rapportées à la teneur en matières solides dans la composition de durcisseur :
50 à 100 % en poids du ou des durcisseurs B ; et/ou **en ce que** le rapport molaire entre les groupes OH contenus dans le ou les poly(méth)acrylate-polyols A et les groupes NCO dans le ou les durcisseurs B est compris entre 1:0,9 et 1:2.

16. Procédé de revêtement d'un substrat comprenant les étapes suivantes :
i. fourniture d'un substrat non revêtu ou prérevêtu ;
ii. application d'au moins un matériau de revêtement transparent bicomposant à base de solvant tel que défini dans l'une quelconque ou plusieurs des revendications 1 à 15 sur le substrat non revêtu ou prérevêtu fourni à l'étape i. pour obtenir une couche de revêtement transparent ; et
iii. durcissement de la couche de revêtement transparent.

17. Procédé selon la revendication 16, dans lequel le durcissement de la couche de revêtement transparent est réalisé à une température comprise entre 40 et 90 °C.

18. Procédé selon la revendication 17, **caractérisé en ce que** le substrat est un substrat polymère, de préférence une carrosserie de véhicule ou une partie de celle-ci.

19. Substrat revêtu, le substrat étant non revêtu ou prérevêtu et comprenant une couche de revêtement transparent durcie comme couche de revêtement de finition, la couche de revêtement transparent durcie ayant été formée à partir d'un matériau de revêtement tel que défini dans l'une quelconque ou plusieurs des revendications 1 à 15, et le substrat étant un substrat métallique, un substrat en verre, un substrat en céramique ou un substrat polymère.

20. Utilisation d'un matériau de revêtement transparent bicomposant à base de solvant tel que défini dans l'une quelconque ou plusieurs des revendications 1 à 15 pour le revêtement de substrats non revêtus ou prérevêtus, de préférence de carrosseries de véhicules, ou de parties de celles-ci.
